# EUROPÄISCHE PATENTSCHRIFT

(11) **EP 0 401 459 B1**
(45) Veröffentlichungstag und Bekanntmachung des Hinweises auf die Patenterteilung: **21.04.1993**
(21) Anmeldenummer: 90100768.2
(22) Anmeldetag: 15.01.1990
(51) Int. Cl.: B60K 15/05, B60K 15/04, B65D 51/00

(54) **Verschluss für den Füllstutzen von Flüssigkeitsbehältern**
Lock for a tank filler neck
Fermeture pour tubulures de remplissage de réservoirs de liquides

(30) Priorität: 09.06.1989 DE 3918947
(43) Veröffentlichungstag der Anmeldung: 12.12.1990
(73) Patentinhaber: Ott, Siegfried, 83278 Traunstein (DE); Wimmer, Friedrich, A-5231 Schalchen (AT)
(72) Erfinder: Ott, Siegfried, 83278 Traunstein (DE); Wimmer, Friedrich, A-5231 Schalchen (AT)
(74) Vertreter: Wey, Hans-Heinrich, Dipl.-Ing.

(56) Entgegenhaltungen:
- EP-A- 0 296 618
- DE-A- 2 440 986
- DE-C- 3 602 844
- FR-A- 778 869
- US-A- 4 091 959

## Beschreibung

Die Erfindung betrifft einen selbstschließenden Verschluß für den Füllstutzen von Flüssigkeitsbehältern, wie beispielsweise Fässer, Kanister, Tanks und dgl. sowie auch von Kraftstofftanks von Kraftfahrzeugen, welcher aus einem am Füllstutzen anbringbaren, mit einer Dichtung versehenen Verschlußring und einer an diesem schwenkbar gelagerten, mit einer Dichtung versehenen Verschlußklappe besteht, die beim Befüllen des Behälters durch den in den Füllstutzen hineingesteckten Auslaufstutzen einer Schlauch- od.dgl. Armatur geöffnet wird, und die sich beim Herausziehen des Auslaufstutzens aus dem Füllstutzen unter der Wirkung einer Feder selbsttätig wieder schließt.

Füllstutzenverschlüsse der in Betracht kommenden Art sind in den unterschiedlichsten Ausführungsformen (beispielsweise aus DE -C1- 36 02 844, EP -A2- 0 296 618, US -A- 4 091 959 und FR -A- 778 869) bekanntgeworden. Sie haben zumeist einen aufwendigen Aufbau und komplizierte Formen, durch die die Herstellungskosten für den Verschluß verhältnismäßig hoch sind.

Der Erfindung liegt die Aufgabe zugrunde, einen Verschluß für den Füllstutzen von Flüssigkeitsbehältern zu schaffen, der einen einfachen, unkomplizierten Aufbau aufweist, um ihn kostengünstig herstellen und montieren zu können, ohne daß jedoch die Funktionalität darunter leidet.

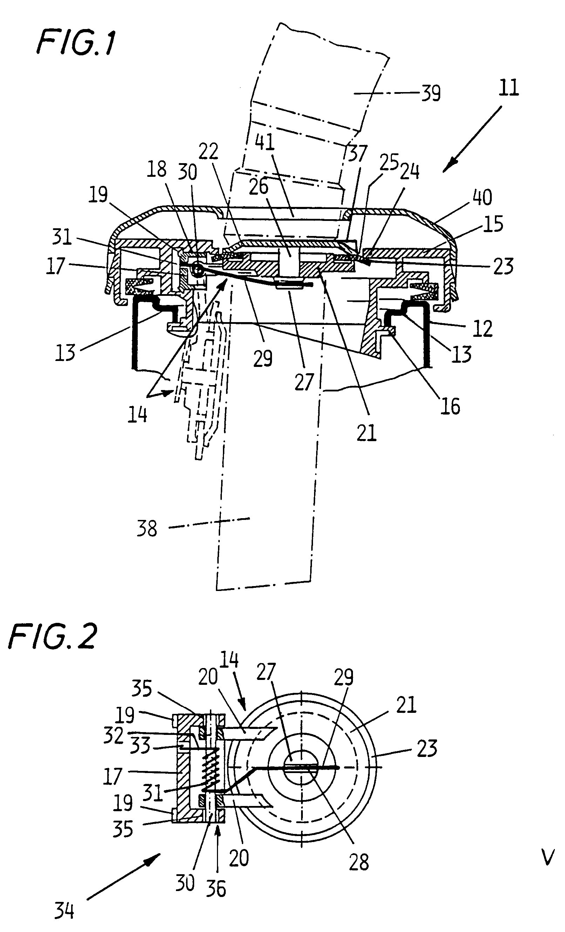

Zur Lösung dieser Aufgabe wird gemäß der Erfindung vorgeschlagen, den in Betracht kommenden Verschluß in der Weise auszubilden, wie dies in Anspruch 1 angegeben ist. Weitere vorteilhafte Merkmale des Verschlusses gehen aus den Unteransprüchen sowie aus der nachfolgenden Beschreibung eines in den Figuren 1 und 2 der Zeichnung dargestellten, besonders bevorzugten Ausführungsbeispiels hervor. Es zeigen:
- Fig. 1: einen Schnitt durch den auf die Mündung eines Füllstutzens eines Flüssigkeitsbehälters aufgesetzten Verschluß, und
- Fig. 2: eine Aufsicht auf die Unter- oder Rückseite der schwenkbar gelagerten Verschlußklappe und ihre Lagerung.

Wie aus Fig. 1 ersichtlich, ist der gemäß der Erfindung ausgebildete Verschluß 11 an der Mündung eines Füllstutzens 12 eines Flüssigkeitsbehälters od.dgl. angebracht. Hierzu befindet sich an der Mündung des Füllstutzens 12 ein Bajonettverschlußring 13, an dem entweder der erfindungsgemäß ausgebildete Verschluß 11 mit seiner verschwenkbaren Verschlußklappe 14 oder ein anderer Verschlußdeckel anbringbar ist.

Der Verschluß 11 besteht aus dem Verschlußring 15 mit Bajonettklauen 16 zu seiner Befestigung an dem Bajonettverschlußring 13 des Füllstutzens 12. An dem Verschlußring 15 ist die Verschlußklappe 14 mittels eines Lagerbocks 17 schwenkbar gelagert, wie dies insbesondere aus Fig. 2 ersichtlich ist. An der Innenseite des Verschlußrings 15 befindet sich eine Aussparung 18, in die der Lagerbock 17 einsetz- und befestigbar ist; letzteres erfolgt vorteilhafterweise mittels der am Lagerbock 17 angeordneten Rastzähne 19.

Die Verschlußklappe 14 besteht aus einer inneren, mit Lagerarmen 20 versehenen Scheibe 21 und einer mit dieser verbundenen äußeren Scheibe 22. Zwischen den beiden Scheiben 21 und 22 ist ein Dichtungsring 23 eingespannt, der am Rand 24 der im Verschlußring 15 angeordneten und mit der Verschlußklappe 14 zu verschließenden Öffnung 25 anliegt, um so für einen dichten Verschluß der Öffnung 25 zu sorgen. Zur Verbindung der beiden Scheiben 21 und 22 dient ein an der äußeren Scheibe 22 sitzender zentraler Zapfen 26, auf dessen freies Ende eine Gewindekappe 27 aufgesetzt ist, die mit einer radialen Nut 28 versehen ist, die der Aufnahme des einen Endes 29 der auf der Lagerachse 30 sitzenden Schließfeder 31 dient, deren zweites Ende 32 in eine Rast 33 im Lagerbock 17 eingreift.

Somit bildet die Verschlußkappe 14 mit ihrer Lagerung eine vormontierbare Baugruppe 34, die sich bei der Endmontage des Verschlusses 11 rasch, einfach und damit rationell an dem Gehäusering 15 anbringen und befestigen läßt, da es lediglich des Einsteckens des Lagerbocks 17 in die Aussparung 18 im Verschlußring 15 bedarf.

Um eine einwandfreie Abdichtung zwischen der Verschlußklappe 14 und dem Rand 24 um die Öffnung 25 im Verschlußring 15 herum zu gewährleisten, d.h. eine einwandfreie Anlage des Dichtungsrings 23 an seiner Sitzfläche entlang des Randes 24 sicherzustellen, befindet sich zwischen den Lagerbohrungen 35 für die Lagerachse 30 und dieser selbst ein gewisses, ausreichend bemessenes Spiel 36, das es ermöglicht, daß die innere Scheibe 21 der Verschlußklappe 14 den Dichtungsring 23 peripher satt gegen seine Sitzfläche anzudrücken. Dieses Lagerspiel 36 ermöglicht auf einfachste Weise einen Ausgleich von fertigungs- und montagebedingten Toleranzen.

Um stets eine einwandfreie Zentrierung der Verschlußklappe 14 gegenüber der Öffnung 25 im Verschlußring 15 zu erhalten, können an der äußeren Scheibe 22 der Verschlußklappe 14 Zentriernasen 37 angebracht sein, von welchen eine diametral zur Lagerachse 30 angeordnet ist.

Zum Zwecke des Befüllens eines Flüssigkeitsbehalters, auf dessen Füllstutzen der erfindungsgemäß ausgebildete Verschluß 11 aufgesetzt ist, braucht lediglich der gestrichelt dargestellte Auslaufstutzen 38 einer Armatur 39 durch die Öffnung 25 im Verschlußring 15 in den Füllstutzen 12 eingeführt zu werden, wobei die Verschlußklappe 14 gegen den Druck der Schließfeder 31 zur Seite geschwenkt wird. Nach dem Befüllen wird der Auslaufstutzen 38 zurückgezogen, wobei die Verschlußklappe 14 die Öffnung 25 wieder selbsttätig verschließt.

Vorteilhafterweise ist der Verschluß 11 mit einer Abdeckhaube 40 versehen, die eine zentrale Öffnung 41 aufweist, die zur Öffnung 25 im Verschlußring 15 koaxial angeordnet ist. Die Abdeckhaube 40 kann an dem Verschlußring 15 festgeklemmt oder durch an sich bekannte Rastmittel festgehalten sein.

Verschlüsse der in Betracht kommenden Art bieten den Vorteil, daß bei häufig notwendigem Befüllen von Flussigkeitsbehältern das ansonst jedesmal erforderliche Abnehmen des Füllstutzenverschlusses entfällt.

## Patentansprüche

1. Selbstschließender Verschluß (11) für den Füllstutzen (12) von Flüssigkeitsbehältern, bestehend aus einem am Füllstutzen (12) anbringbaren, mit einem Dichtungsring versehenen Verschlußring (15) und einer an diesem schwenkbar gelagerten, mit einer Dichtung (23) versehenen, federbeaufschlagten Verschlußklappe (14), dadurch gekennzeichnet, daß die Verschlußklappe (14) mittels zweier Lagerarme (20) an einer von einem in eine Aussparung (18) am Gehäusering (15) eingesetzten Lagerbock (17) getragenen Achse (30) schwenkbar gelagert ist und daß auf die Verschlußklappe (14) eine auf der Achse (30) des Lagerbocks (17) sitzende Schließfeder (31) einwirkt, deren eines Ende (29) an der Verschlußklappe (14) bzw. an einem Lagerarm (20) und deren anderes Ende (32) an dem Lagerbock (17) angreift.

2. Verschluß nach Anspruch 1, dadurch gekennzeichnet, daß der in die Aussparung (18) am Gehäusering (15) eingesetzte Lagerbock (17) mit diesem verrastet ist.

3. Verschluß nach Anspruch 1 oder 2, dadurch gekennzeichnet, daß die Verschlußklappe (14) aus einer inneren, mit zwei Lagerarmen (20) versehenen Scheibe (21) und einer äußeren, einen Dichtungsring (23) zwischen sich und der inneren Scheibe (21) einspannenden Deckscheibe (22) besteht.

4. Verschluß nach Anspruch 3, dadurch gekennzeichnet, daß die beiden Scheiben (21, 22) der Verschlußklappe (14) mittels eines zentralen Zapfens (26) und einer Gewindekappe (27) miteinander verbunden sind, in deren Oberseite sich eine radiale Nut (28) für die Aufnahme des einen Endes (29) der Schließfeder (31) befindet.

5. Verschluß nach einem der Ansprüche 1 bis 4, dadurch gekennzeichnet, daß zwischen den Lagerbohrungen (35) für die Lagerachse (30) im Lagerbock (17) und der Lagerachse (30) ein radiales, Fertigungstoleranzen ausgleichendes Spiel (36) vorhanden ist.

6. Verschluß nach Anspruch 5, dadurch gekennzeichnet, daß an der äußeren Scheibe (22) der Verschlußklappe (14) wenigstens eine, in radialer Richtung diametral zur Lagerachse (30) wirksame Zentriernase (37) angeordnet ist.

7. Verschluß nach einem der Ansprüche 1 bis 6, gekennzeichnet durch eine Abdeckhaube (40) mit zentraler und zur Verschlußklappe (14) koaxialer Öffnung (41) für das Einführen des Auslaufstutzens (38) einer Füllarmatur (39).

## Claims

1. A self-closing stopper (11) for the filler spout (12) of liquid containers consisting of a stopper ring (15) provided with a sealing ring and attachable to the filler spout and a spring-loaded stopper flap (14) provided with a seal (23) and swivel-mounted on the stopper ring (15), characterized in that the stopper flap (14) is swivelmounted by means of two bearing arms (20) on an axis (30) supported by a bearing block (17) inserted into a recess (18) on the housing ring (15) and that a locking spring (31) resting on the axis (30) of the bearing block (17) acts on the stopper flap (14) whose one end (29) engages the stopper flap (14) or a bearing arm (20) and whose other end (32) engages the bearing block (17).

2. A stopper according to claim 1, characterized in that the bearing block (17) inserted into the recess (18) on the housing ring (15) is locked with the same.

3. A stopper according to claim 1 or 2, characterized in that the stopper flap (14) consists of an inner disk (21) provided with two bearing arms (20) and an outer cover disk (22) clamping a sealing ring (23) between itself and the inner disk (21).

4. A stopper according to claim 3, characterized in that the two disks (21, 22) of the stopper flap (14) are connected with each other by means of a central journal (26) and a threaded cap (27) in whose upper side there is a radial groove (28) for receiving one end (29) of the locking spring (31).

5. A stopper according to any of claims 1 to 4, characterized in that a radial clearance (36) compensating for manufacturing tolerances exists between the bearing bores (35) for the bearing axis (30) in the bearing block (17) and the bearing axis (30).

6. A stopper according to claim 5, characterized in that at least one centering lug (37) active in radial direction diametrally to the bearing axis (30) is disposed at the outer disk (22) of the stopper flap (14).

7. A stopper according to any of claims 1 to 6, characterized by a cover cap (40) with a central opening (41) coaxial to the stopper flap (14) for the insertion of the delivery spout (38) of a filling fitting (39).

## Revendications

1. Fermeture automatique (11) pour les tubulures de remplissage (12) de réservoirs de liquide, du type comprenant une bague de fermeture (15), agencée de façon à pouvoir être posée sur la tubulure de remplissage (12) et pourvue d'une rondelle d'étanchéité, et un volet de fermeture (14) qui est monté sur cette bague de fermeture (15) de manière pivotante et qui est pourvu d'une garniture d'étanchéité (23) et est soumis à l'action d'un ressort, caractérisée en ce que le volet de fermeture (14) est monté pivotant au moyen de deux pattes de charnière (20) sur un axe (30) porté par un bloc de charnière (17) monté dans un évidement (18) ménagé dans la bague de fermeture (15) et en ce qu'un ressort de fermeture (31), monté sur l'axe (30) de la charnière (17), agit sur le volet de fermeture (14), l'une (29) des extrémités de ce ressort de fermeture (31) prenant appui sur le volet de fermeture (14) ou sur une patte de charnière (20) et son autre extrémité (32) prenant appui sur le bloc de charnière (17).

2. Fermeture suivant la revendication 1, caractérisée en ce que la charnière (17) montée dans l'évidement (18) de la bague de fermeture (15) est fixée sur cette dernière par enclenchement.

3. Fermeture suivant l'une des revendications 1 et 2, caractérisée en ce que le volet de fermeture (14) est constitué d'un disque intérieur (21), pourvu de deux pattes de charnière (20), et d'un disque extérieur de recouvrement (22) servant à serrer une rondelle d'étanchéité (23) entre lui et le disque intérieur (21).

4. Fermeture suivant la revendication 3, caractérisée en ce que les deux disques (21, 22) du volet de fermeture (14) sont réunis entre eux au moyen d'un axe central (26) et d'un capuchon taraudé (27) dans la face supérieure duquel est ménagée une gorge radiale (28) servant à recevoir l'une (29) des extrémités du ressort de fermeture (31).

5. Fermeture suivant l'une des revendications 1 à 4, caractérisée en ce qu'un jeu radial (36), compensant les tolérances de fabrication, est prévu entre les trous d'articulation (35), prévus dans le bloc de charnière (17) pour l'axe de charnière (30) et cet axe de charnière (30) lui-même.

6. Fermeture suivant la revendication 5, caractérisée en ce qu'il est prévu, sur le disque extérieur (22) du volet de fermeture (14), au moins un bec de centrage (37) agissant dans la direction radiale d'une manière diamétralement opposée à l'axe de charnière (30).

7. Fermeture suivant l'une des revendications 1 à 6, caractérisée par un capuchon de recouvrement (40) comportant une ouverture centrale (41) disposée suivant le même axe que le volet de fermeture (14) et servant à l'introduction de l'embout de distribution (38) d'un élément de tuyauterie de remplissage (39).
